# EUROPEAN PATENT SPECIFICATION

(11) **EP 0 826 410 B1**
(45) Date of publication and mention of the grant of the patent: **01.08.2001**
(21) Application number: 97115117.0
(22) Date of filing: 01.09.1997
(51) Int. Cl.: B01D 53/94, B01J 21/06

(54) **Catalyst for purifying exhaust gas**
Katalysator zur Reinigung von Abgasen
Catalyseur pour la purification de gaz d'échappement

(30) Priority: 30.08.1996 JP 23111796; 01.11.1996 JP 29162296; 07.03.1997 JP 5370797
(43) Date of publication of application: 04.03.1998
(73) Proprietor: CATALER INDUSTRIAL CO., LTD., Ogasa-gun, Shizuoka-ken (JP); TOYOTA JIDOSHA KABUSHIKI KAISHA, Aichi-ken (JP)
(72) Inventor: Aono, Norihiko, Daito-cho, Ogasa-gun, Shizuoka-ken (JP); Tanaka, Seiji, Daito-cho, Ogasa-gun, Shizuoka-ken (JP); Kasahara, Koichi, Daito-cho, Ogasa-gun, Shizuoka-ken (JP); Furutani, Toshinobu, Toyota-shi, Aichi-ken (JP); Hayashi, Kotaro, Toyota-shi, Aichi-ken (JP); Ueno, Hideaki, Toyota-shi, Aichi-ken (JP)
(74) Representative: Pellmann, Hans-Bernd, Dipl.-Ing.

(56) References cited:
- EP-A- 0 264 000
- EP-A- 0 385 164
- EP-A- 0 585 795
- GB-A- 2 267 905

## Description

### BACKGROUND OF THE INVENTION

### 1. Field of the Invention

The present invention relates to catalysts for purifying exhaust gases, and more particularly, to catalysts capable of eliminating harmful components, such as carbon monoxide (CO) or hydrocarbon (HC), contained in exhaust gases discharged from combustion furnaces, boilers, internal combustion engines or the like, especially exhaust gases discharged from diesel engines.

### 2. Description of the Related Art

Conventionally, exhaust gases discharged from combustion furnaces, boilers, internal combustion engines or the like have been purified by eliminating hydrocarbon and carbon monoxide therein with catalysts composed of heat-resistant ceramic particles, each having a large specific surface area, and catalytic components supported with surfaces of theheat-resistant ceramic particles. The catalysts thus arranged are always exposed to high temperature exhaust gases. So, the specific surface area of the ceramic particles is reduced and/or the particles of the catalytic components supported with the ceramic particles are enlarged, whereby the real surface, area of the catalytic components is reduced so that the catalytic property deteriorates. Accordingly, there has arisen a need to develop heat-resistant ceramics capable of preventing the reduction of its specific surface area without enlarging the particles of the catalytic components supported therewith, and accordingly restraining the deterioration of the catalytic property even when used in high temperature exhaust gases over a long period of time.

Catalysts have been used to purify hydrocarbon, carbon monoxide and nitrogen oxide (NOx) contained in exhaustgases from internal combustion engines. Exhaust gases fromdiesel engines further contain particulates. It has been desired particularly to develop catalysts enablng sure elimination of these particulates. As the conventional catalysts for purifying exhaust gases containing particulates, trap-type (with or without catalysts) and open-type SOF decomposition catalysts have been known.

The trap-type SOF decomposition catalysts trap particulates contained in exhaust gases to restrain the discharging thereof, and are particularly effective in purifying exhaust gases containing a large amount of dry soot. This type of catalysts have, however, many problems in using them practically. Namely, regenerating devices are further needed, catalyst substrates may be cracked in the regenerating step thereof, there may occur clogging with ashes, and entire systems become complex.

On the other hand, as shown in Publication of examined Japanese Patent application No. Hei 3-38255, for example, the open-type SOF decomposition catalysts are composed of a catalyst support layer of activated alumina, for example, and oxidation catalyst of metals of the platinum group or the like, which is supported with the catalyst support layer, like the case of gasoline engines or the like. With this type of catalysts, SOF within the particulates are oxidized and decomposed along with carbon monoxide and hydrocarbon tobe purified. These open-type SOF decomposition catalysts have the disadvantage that the rate of elimination of dry soot is low. But with these catalysts, no regenerating device is needed, and by improving the combustion conditions and fuel, the amount of dry soot can be reduced, so that the development of these catalysts has been invenstigated.

These conventional catalysts for purifying exhaust gases have, however, been incapable of reducing the amountof particulates discharged. Within high-temperature exhaust gases which causes the generation of particulates, sintering of inorganic oxide contained in heat-resistant inorganic oxide layers, and deterioration of platinum as the catalyst metal occur to decrease the catalytic property. Publications of unexamined Japanese Patent applications Nos. sho 62-149338 and 62-149339 disclose catalysts wherein titania is finely dispersed in alumina by a metal alkoxide method or coprecipitation method to enhance the heat resistance of activatedalumina- based inorganic oxide layers. These alumina-based catalysts, however, may absorb sulfur compounds to form sulfate. This results in the amount of particulates discharged being not restrained sufficiently. The particulates-restraining operation has not been disclosed as an evaluation item in the above publications.

On the other hand, titania-based catalysts exhibit low adsorption against sulfur compounds so as to be discharged without changed. Therefore, it has been known that thetitania-based catalysts can restrain the formation of sulfate. However, these titania-based catalysts are insufficientin heat resistance. Effective measures for enhancing the heat resistance thereof has not been known.

GB-A-2 267 905 discloses a process for the preparation of anatase titanium dioxide having a high surface area which is suitable as a catalyst support which involves forming an aqueous dispersion of titanium dioxide at a pH less than 3 and depositing a first coating of a hydrous oxide of an element such a Al, Zr, Si or La which acts as a rutile inhibitor and a second coating of a phosphate on the particles of titanium dioxide. The rutile inhibitor is precipitated as a hydrous oxide on the surface of the titanium dioxide particles.

### Summary of the Invention

It is an object of the present invention to provide a catalyst capable of maintaining its catalytic performance over a long period of time, and a catalyst capable of maintaining its purification performance against particulates, HC, CO, NOx over a long period of time.

The present inventors have intensively researchedto attain the above object. As a result, they have found acomposition for a catalyst capable of maintaining its purification performance and accordingly exhibit excellent durability in high temperature atmospheres, as compared to the conventional catalysts, and have completed the present invention.

The catalyst for purifying exhaust gases with the present invention is composed of a catalyst substrate and aheat-resistant inorganic oxide layer containing catalytic components, which is provided on the catalyst substrate. The heat-resistant inorganic oxide layer contains silica-doped anatase titania having a structure wherein 3 to 35 % by weight based on the total weight of silica-doped anatase titania of silica is finely dispersed between and retained by anatase titania particles, which is an oxide obtained in the statewhere a silicon-containing compound and titanium-containingcompound are mixed together in the molecular state.

The silica-doped anatase titania is particularly excellent in heat resistance, and has a high specific surface area even after used over a long period of time. With this silica-doped anatase titania, the enlargement of the particles of the catalytic components is blocked and high catalytic performance can be maintained over a long period of time.

With the catalyst for purifying exhaust gases of the present invention, the heat-resistant inorganic oxide layer contains silica-doped anatase titania which is an oxide obtained in the state where 3 to 35 % by weight of silica based on the total weight of silica-doped anatase titania is dispersed between and retained by anatase titania particles in the molecular state.

It is preferable that the silica-doped anatase titania contained in the heat resistant inorganic oxide layer has a structure that extremely fine silica particles on a level of an atomic order disperse between titania particles. With this structure, titania particles are prevented from sintering so as not to reduce the specific surface area. The amount of silica added to the titania particles ranges from 3 to 35 % by weight. If the amount of silica added is less than 3 % by weight, the effect of preventing sintering of titania cannot be obtained, and if the amount of silica added exceeds 35 % by weight, the sintering restraining effect is not enhanced so as to be less preferable.

Examples of the method of finely dispersing silica on an atomic level include a hydrolysis method of dispersing a mixture of alkoxide of titanium and alkoxide of siliconin titania with hydrolysis, which is performed with the present invention.

Titania has excellent SOx resistance, and has been used in exhaust gas atmospheres containing a large amount of SOx, for denitrification purpose, for example. Conventional titania without doped with silica exhibits purification ability in temperature conditions of 500 °C or less, but sintering of particles of titania occurs in temperature conditions over 500 °C such as exhaust gases from diesel engine vehicles so that the purification performance remarkably decreases. In contrast, silica-doped anatase titania of the present invention does not greatly change its crystal structure at high temperatures so as to exhibit high heat resistance. Accordingly, silica-doped anatase titania is difficult to sinter.

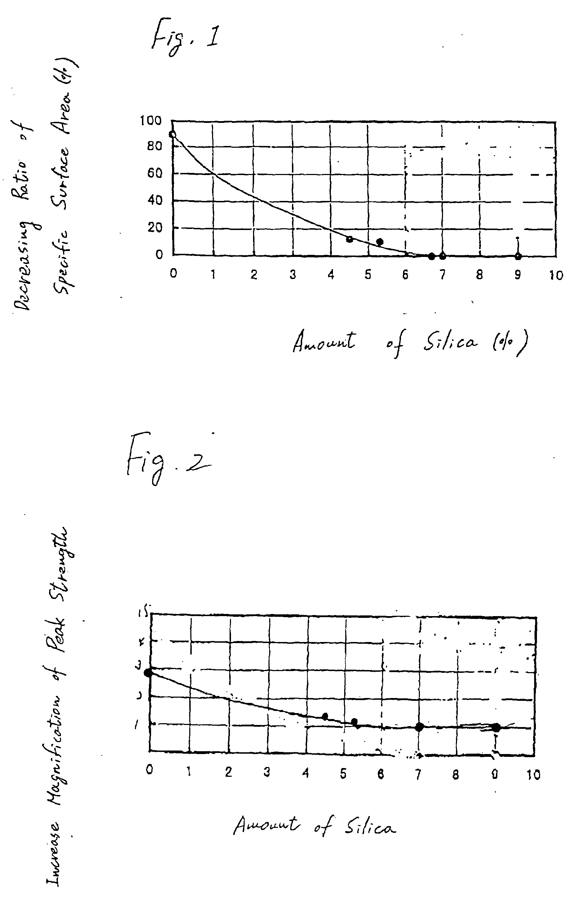

A heat resistance test was performed in order to exhibit heat-resistance of silica-doped anatase titania. In the heat resistance test, silica-doped anatase titania was put into an electric furnace having air at 800 °C , and a heat treatment was performed for 5 hours. Figure 1 shows the relationship between an amount of silica in silica-doped anatase titania and decreasing rate of specific surface area. Figure 2 shows the relationship between an amount of silica in silica-doped anatase titania and an increase magnification of peak strength cps on X-ray diffraction analysis with 2 θ = 25 °.

As shown in Figure 1, when the amount of silica increases, decresing rate of specific surface area becomes small. As seen from Figure 2, when the amount of silica increases, the increase magnification of peak strength also becomes small. When the amount of silica is not less than 6%, decreasing rate of specific surface area is not more than 10%, and the peak strength increases by 1.5 times or less.

In addition to silica-doped anatase titania, needle-like titanium oxide may be contained in the heat-resistant inorganic oxide layer. By virtue of the needle-like configuration, the needle-like titanium oxide acts to connect powdery heat resistant inorganic oxide particles integrally. Needle-like titanium oxides are tangled with each other randomly to define relatively large pores. The preferable average fiber diameter of these needle-like titanium oxides rangesfrom 0.01 to 1 *µ* m, and the preferable average fiber length thereof ranges from 1 to 6 *µ* m. And the preferable BET specific surface area ranges from 2 to 20 m ² /g. The needle-like titanium oxide has SOx resistance, like the powdery titania, so that it can be used in an exhaust gas atmosphere containing a large amount of SOx for denitrification purpose, too.

Instead of the needle-like titanium oxide, zeolite can be used. Zeolite added to the heat-resistant inorganic oxide layer also acts to improve the purification performance of catalyst, like the needle-like titanium oxide.

The powdery heat-resistant inorganic oxide composing the heat-resistant inorganic oxide layer substantially supports catalyst metals. It is preferable that the powdery heat-resistant inorganic oxide has a large specific surface area and exhibits good activation, like the conventional one. The preferable average particle diameter of the powdery heat-resistant inorganic oxide ranges from 0.01 to 5 *µ* m and the preferable BET specific surface area thereof ranges from 50 to 500 m ² /g.

To support the heat-resistant inorganic oxide layer with the catalyst substrate, it is preferable to prepare a slurry of the heat-resistant inorganic oxide and coat the catalyst substrate with the slurry prepared. Titania sol, or silica sol and aluminium nitrate, oxyzirconium nitrate or the like may be mixed as a binder when preparing the slurry. The preferable amount of coating of the heat-resistant inorgnaic oxide layer ranges from 50 to 250 g per unit volume (1 liter) of catalyst. If the amount of coating of titania is less than 50 g, the catalytic property cannot be sufficiently achieved so as to be less preferable. If the amount of coating of titania exceeds 250 g, the amount of catalyst metal to be supported must be increased so as to be less preferable. The preferable average particle diameter of titania for composing the heat-resistant inorganic oxide layer rangesfrom 0.5 to 5 *µ* m, and the preferable content of titania containing silica in a resulting coating layer is 40 % or more.

The heat-resistant inorganic oxide layer can alsosupport as a third component at least one of cesium, tungsten, molybdenum, vanadium, zirconium, yttrium, indium, cerium, praseodymium, copper, cobalt, gold, silver or the like. By virtue of the third component, the heat resistance of the catalyst is further improved, whereby the purification performance can be improved.

The preferable amount of platinum supported ranges from 0.1 to 5.0 g per unit volume (1 liter) of catalyst. If the amount of platinum supported exceeds 5.0 g/liter, theimprovement of activation is very slight even with further increase of the amount of plutinum so as to be expensive. In particular, 0.02 to 3.0 g/liter of platinum is more preferable for both the catalytic activation and cost.

The preferable amount of palladium supported ranges from 0.1 to 10.0 g per unit volume (1 liter) of catalyst. If the amount of palladium supported is less than 0.1 g/liter, sufficient catalytic activation may not be obtained If the amount of palladium supported exceeds 10.0 g/liter, the improvement of activation is very slight even with furtherincrease of the amount of palladium so as to be expensive. In particular, 0.5 to 5.0 g/liter of palladium is more preferable for both the catalytic activation and cost. When palladium is used along with platinum, the purification performance of the catalyst can be further enhanced.

The preferable amount of rhodium supported rangesfrom 0.01 to 1.0 g per unit volume (1 liter) of catalyst If the amount of rhodium supported is less than 0.01 g/liter, sufficient catalytic activation may not be obtained. If the amount of rhodium supported exceeds 1.0 g/liter, the improvement of activation is very slight even with further increase of the amount of rhodium so as to be expensive. In particular, 0.05 to 0.5 g/liter of rhodium is more preferable for both the catalytic activation and cost

These catalyst metals may be previously supportedwith titania powder containing silica to define the heat-resistant inorganic oxide layers. With this arrangement, the resistance to heat and poisonous components within exhaust gases can be both improved.

Since, with the catalyst of the present invention, silica- doped anatase titania is used in the heat-resistantinorganic oxide layer supporting the catalytic components, the particles defining the support layer are prevented from being enlarged due to sintering at elevated temperatures, whereby the heat-resistant inorganic oxide layer can maintain a large surface area, and accordingly, high catalytic performance can be maintained over a long period of time.

Other objects, features, and characteristics of the present invention will become apparent upon considerationof the following description and the appended claims, all of which form a part of this specification.

### BRIEF DESCRIPTION OF THE DRAWINGS

The exact nature of this invention, as well as other objects and advantages thereof, will be readily apparent from consideration of the following specification relating to the annexed drawings in which:
Figure 1 is a diagram for showing the relationship between an amount of silica in silica-doped anatase titania and decreasing rate of specific surface area after a heat resistance test is performed;
Figure 2 is a diagram for showing the relationship between an amount of silica in silica-doped anatase titania and an increase magnification of peak strength on X-ray diffraction analysis after a heat-resistance test is performed.

### DETAILED DESCRIPTION OF THE PREFERRED EXEMPLARY EMBODIMENTS

Hereinafter, the present invention will be explained in detail based on several embodiments. The scope of the present invention is not limited to these embodiments.

### Preparation of silica-doped titania powder

Titanium tetrachloride (equivalent to 80 parts byweight of titanium dioxide) was dispersed in 500 parts by volume of isopropyl alcohol. Next, ethyl silicate (equivalent to 12 parts by weight of silica) was mixed with the alcohol solution thus prepared, and stirred for about 1 hour. Then, an aqueous solution composed of 50 parts by volume of 0.1Nhydrochloric acid and 450 parts by volume of ion-exchange water was added to the above mixture at a rate of 1 ml/min. while stirring. This results in white colloid composed of silica-doped titania being formed due to hydrolysis reaction.
After stirring for all day and night, the mixture was left for two days to grow the white colloid and resulting white precipitation was filtered.

After removing water at 120 °C, a product was fired at 700 °C for 1 hour. Upon examining the physical properties of resulting white powder (hereinafter will be called HST), a specific surface area was 90 m²/g, and an average particle diameter was 0.5 *µ* m. Upon X-ray diffraction (hereinafter will be called XRD) analysis, the HST had a structure of anatase titanium dioxide. Upon quantitative analysis with fluorescent X ray, the amount of SiOx was 11 % by weight

In the preparation described above, a sol-gel method based on alkoxide hydrolysis was used. Instead, other preparation methods such as a CVD method, coprecipitation method, flaming method or the like may be used.

### Embodiment 1:

50 parts of HST powder thus prepared, 30 parts of mordenite of proton-type synthetic zeolite (silica-alumina ratio: about 30), 20 parts (in terms of solid portion) of titania sol STS-01 manufactured by Ishihara Sangyo and 100 parts of ion-exchange water were mixed together, and pulverized for 12 hours with a ball mill to prepare a slurry having anaverage particle diameter of 1.2 *µ* m.

A monolith substrate formed of cordierite, which defines cells of 400 /in ² and has a diameter of 117 mm and a length of 122 mm (volume: about 13 L), was coated with the slurry thus prepared. Then, the substrate was dried at 100 °C for 5 hours and heated at 250 °C for 3 hours to form a titania based heat-resistant inorganic oxide layer containing zeolite on the monolith substrate. The amount of a coating of the resultant heat-resistant inorganic oxide layer was 150 g per liter of the substrate (hereinafter will be disclosed 150g/L).

Next, the monolith substrate thus obtained was immersed in an aqueous solution containing a predetermined amount of platinum amine hydrate. After excess water was blown off, the substrate was heated at 250 °C to decompose platinum salt to support 1.5 g of platinum per liter of substrate(hereinafter will be disclosed 1.5 g/L) with the substrate. Thus, a catalyst shown in Table 1 was obtained.

### Embodiment 2:

A catalyst was prepared by the method similar to that of Embodiment 1 except that needle-like titanium oxide powder having an average fiber diameter of 0.07 to 0.5 *µ*m and an average fiber length of 1 to 7 *µ*m was added instead of mordenite. The average particle diameter of the slurry was 1 *µ*m.

### Embodiment 3:

A catalyst was prepared by the method similar to that of Embodiment 1 except that ZSM-5 obtained by ion-exchange of about 0.5 % by weight of cerium (Ce) was added instead of mordenite.

### Embodiment 4:

A catalyst was prepared by the method similar to that of Embodiment 1 except that ZSM-5 obtained by ion-exchange of about 3.5 % by weight of cobalt (Co) was added instead of mordenite.

### Embodiment 5:

A catalyst was prepared by the method similar to that of Embodiment 1 except that ZSM-5 obtained by ion-exchange of about 3.5 % by weight of copper (Cu) was added instead of mordenite.

### Embodiment 6:

A catalyst was prepared by the method similar to that of Embodiment 1 except that USY (stable Y type zeolite)obtained by ion-exchange of about 0.5 % by weight of indium(In) was added instead of mordenite.

### Embodiment 7:

After supporting platinum by the method similar tothat of Embodiment 1, a substrate was immersed in an aqueous solution containing iridium chloride, and excess water was blown off. Then, the substrate was reduced within a hydrogen stream at 500 °C for 1 hour. The amount of iridium supported was 1g/L.

Next, the substrate was immersed in an aqueous solution containing cesium nitrate to support cesium nitrate with a heat-resistant inorganic oxide layer. After excess liquid was blown off, the substrate was dried at 250 °C and fired at 500 °C for 1 hour. The amount of cesium supported was 0.05 mol/L.

### Embodiment 8:

A catalyst was prepared by the method similar to that of Embodiment 7 except that rhodium chloride was used instead of iridium. The amount of rhodium was 0.2 g/L.

### Embodiment 9:

A catalyst was prepared by the method similar to that of Embodiment 7 except that palladium nitrate was used instead of iridium. The amount of palladium was 0.5 g/L.

### Embodiment 10:

A catalyst was prepared by the method similar to that of Embodiment 7 except that K-type ferrielite (silica-alumina ratio: about 20) was used instead of mordenite.

### Embodiment 11:

A heat-resistant inorganic oxide layer was formedon a substerate by the method similar to that of Embodiment1, and then immersed in an aqueous solution containing ammonium metawolframate and ammonium molybdate. After excess water was blown off, the substrate was dried at 250 °C and fired at 500 °C for 1 hour. The amounts of W and Mo supported were 0.05 mol/L, respectively, in terms of elements thereof.

### Embodiment 12:

A catalyst was prepared by the method similar to that of Embodiment 11 except that an aqueous solution of oxalic acid of vanadium was used instead of the aqueous solution of ammonium metawolframate and ammonium molybdate. The amount of vanadium supported was 0.1 mol/L.

### Embodiment 13:

A catalyst was prepared by the method similar to that of Embodiment 11 except that zirconium oxynitrate was used instead of ammonium metawolframate and ammonium molybdate. The amount of zirconium supported was 0.1 mol/L.

### Embodiment 14:

A catalyst was prepared by the method similar to that of Embodiment 11 except that an aqueous solution of yttrium nitrate was used instead of ammonium metawolframate andammonium molybdate. The amount of yttrium supported was 0.1 mol/L.

### Embodiment 15:

A catalyst was prepared by the method similar to that of Embodiment 11 except that an aqueous solution of praseodymium nitrate was used instead of ammonium metawolframate and ammonium molybdate. The amount of praseodymium supported was 0.1 mol/L.

### Embodiment 16:

A catalyst was prepared by the method similar to that of Embodiment 11 except that an aqueous solution of gold chloride was used instead of ammonium metawolframate and ammonium molybdate. The amount of gold supported was 0.1 g/L.

### Embodiment 17:

A catalyst was prepared by the method similar to that of Embodiment 11 except that an aqueous solution of silver nitrate was used instead of ammonium metawolframate and ammonium molybdate. The amount of silver supported was 0.1 mol/L.

### Embodiment 18:

A catalyst was prepared by the method similar to that of Embodiment 1 except that silica-doped anatase titania obtained by the reaction of evaporated titanium tetrachloride and evaporated silicon tetrachloride in an atmosphere containing of inert gas, air and hydrogen with a flame from a burner (flaming method) was used instead of HST powder. This silica-doped anatase titania had a BET specific surface area of 56 m² /g, an average particle diameter of 4 *µ* m, and a structure of anatase titanium dioxide. The content of SiO ₂ measured with fluorescent X ray was 8 % by weight.

### Embodiment 19:

A catalyst was prepared by the method similar to that of Embodiment 1 except that 30 parts of HST powder was added instead of 30 parts of mordenite powder.

### Comparative example 1:

A slurry composed of 100 parts by weight of activated alumina powder having an average particle diameter of 5 µm , 5 parts by weight of alumina hydration, 1 part by weight of aluminium nitrate and 150 parts by weight of ion-exchange water was applied to a monolith substrate formed of cordierite, which defines cells of 400/in ² and has a diameter of 117 mm and a length of 122 mm (volume of about 1.3 L). Then, the substrate was dried and fired at 500 °C for 1 hour to form a heat-resistant inorganic oxide layer (150 g/L) composed of an activated alumina layer on the monolith substrate.

Next, the monolith substrate provided with the heat-resistant inorganic oxide layer was immersed in an aqueous solution of dinitrodiamino platinic acid to support 1.5 g /L of platinum.

### Comparative example 2:

A catalyst was prepared by the method similar to that of Comparative example 1 except that 100 parts by weight of titanium dioxide powder having an average particle diameter of 3 *µ* m and titania sol STS-01 (equivalent to 20 parts by weight of titanium dioxide) were used instead of activated alumina powder and alumina hydration.

### Comparative example 3:

A catalyst was prepared by the method similar to that of Comparative example 2 except that 90 parts by weightof titanium dioxide powder and 10 parts by weight of silicapowder were used in place of 100 parts by weight of titanium dioxide powder.

### Comparative example 4:

A catalyst was prepared by the method similar to that of Comparative example 2 except that anatase titanium dioxide containing 9 % by weight of alumina and having a BET specific surface area of 88 m²/g, which was prepared by theflaming method disclosed in Japanese Patent No. 2503370, was used instead of titanium dioxide powder.

### Comparative example 5:

A catalyst was prepared by the method similar to that of Comparative example 2 except that 60 parts by weightof titanium dioxide powder, 10 parts by weight of silica powder and 30 parts by weight of mordenite powder were used instead of 100 parts by weight of titanium dioxide powder.

### Endurance and evaluation method:

Catalysts thus prepared were respectively securedto a DI turbo-engine of 3.1 liter. And the engine was operated for 500 hours with repetition of cycles, each being composed of 10 minutes of idle operation and 10 minutes of operation at 2000 rpm with 40 % load (inlet gas temperature: 400 °C) and then operated for 50 hours under full-throttled condition at 4000 rpm (inlet gas temperature: 670 °C). Thus, endurance samples were prepared.

Samples thus prepared were respectively secured to a DI turbo-vehicle of 2.8 liter, and Japanese 10 Mode and 15 Mode were measured with a Chassis dynamometer and Dilution tunnel manufactured by Horiba Seisakusho to examine the relation between the purification performance against HC, CO, NOx and PM and catalysts.

Next, samples were removed from the vehicle, and the coating layers were scratched off. Then, the state of each sample was examined with respect to the rate of deterioration of BET specific surface area (D) and XRD thereof. Table 1 shows the components of each sample and Table 2 shows the rate of purification and state thereof. In Table 2, "initial" means the catalyst of Embodiment 1 prior to endurance tests.

**Table 1**

| Embodiment No. | Composition of heat-resistant inorganic oxide layer | | | | Catalyst metal | | Amount of inorganic oxide layer |
|---|---|---|---|---|---|---|---|
| | A group | B group | C group | additive | kind | amount (g/L) | amount of coating(g/L) |
| 1 | silica-doped titania | mordenite | titania sol | - | Pt | 1.5 | 150 |
| 2 | silica-doped titania | needle like titania | titania sol | - | Pt | 1.5 | 150 |
| 3 | silica-doped titania | ZSM-5 | titania sol | Ce | Pt | 1.5 | 150 |
| 4 | silica-doped titania | ZSM-5 | titania sol | Co | Pt | 1.5 | 150 |
| 5 | silica-doped titania | ZSM-5 | titania sol | Cu | Pt | 1.5 | 150 |
| 6 | silica-doped titania | USY | titania sol | In | Pt | 1.5 | 150 |
| 7 | silica-doped titania | mordenite | titania sol | Cs | Pt/Ir | 1.5/1 | 150 |
| 8 | silica-doped titania | mordenite | titania sol | Cs | Pt/Rh | 1.5/0.2 | 150 |
| 9 | silica-doped titania | mordenite | titania sol | Cs | Pt/Pd | 1.5/0.5 | 150 |
| 10 | silica-doped titania | ferrielite | titania sol | Cs | Pt/Ir | 1.5/1 | 150 |
| 11 | silica-doped titania | mordenite | titania sol | W/Mo | Pt | 1.5 | 150 |
| 12 | silica-doped titania | mordenite | titania sol | V | Pt | 1.5 | 150 |
| 13 | silica-doped titania | mordenite | titania sol | Zr | Pt | 1.5 | 150 |
| 14 | silica-doped titania | mordenite | titania sol | Y | Pt | 1.5 | 150 |
| 15 | silica-doped titania | mordenite | titania sol | Pr | Pt | 1.5 | 150 |
| 16 | silica-doped titania | mordenite | titania sol | Au | Pt | 1.5 | 150 |
| 17 | silica-doped titania | mordenite | titania sol | Ag | Pt | 1.5 | 150 |
| 18 | silica-doped titania | mordenite | titania sol | - | Pt | 1.5 | 150 |
| 19 | silica-doped titania | - | titania sol | - | Pt | 1.5 | 150 |

| Comparative ex. | | | | | | | |
|---|---|---|---|---|---|---|---|
| 1 | alumina | - | alumina hydration | - | Pt | 1.5 | 150 |
| 2 | titania | - | titania sol | - | Pt | 1.5 | 150 |
| 3 | silica-doped titania | - | titania sol | - | Pt | 1.5 | 150 |
| 4 | titania, alumina | - | titania sol | - | Pt | 1.5 | 150 |
| 5 | titania, silica | - | titania sol | - | Pt | 1.5 | 150 |

**Table 2**

| Embodiment No. | Rate of purification (%) | | | | State of catalyst layer | |
|---|---|---|---|---|---|---|
| | HC | CO | NOx | PM | D(%) | XRD |
| 1 | 83 | 81 | 13 | 46 | 4 | anatase TiO ₂ , mordenite |
| 2 | 85 | 80 | 18 | 45 | 3 | anatase TiO ₂ , needle-like TiO ₂ |
| 3 | 82 | 80 | 19 | 45 | 5 | anatase TiO ₂ , ZSM-5 |
| 4 | 85 | 81 | 14 | 46 | 7 | anatase TiO ₂ , ZSM-5 |
| 5 | 80 | 82 | 16 | 42 | 8 | anatase TiO ₂ , ZSM-5 |
| 6 | 84 | 79 | 21 | 40 | 7 | anatase TiO ₂ . USY |
| 7 | 86 | 83 | 17 | 43 | 2 | anatase TiO ₂ , mordenite |
| 8 | 87 | 82 | 16 | 43 | 4 | anatase TiO ₂ , mordenite |
| 9 | 79 | 80 | 12 | 42 | 5 | anatase TiO ₂ , mordenite |
| 10 | 80 | 79 | 13 | 41 | 8 | anatase TiO ₂ , mordenite |
| 11 | 82 | 84 | 15 | 40 | 9 | anatase TiO ₂ , mordenite |
| 12 | 83 | 84 | 19 | 45 | 4 | anatase TiO ₂ , mordenite |
| 13 | 81 | 82 | 11 | 44 | 3 | anatase TiO ₂ , mordenite |
| 14 | 81 | 81 | 13 | 43 | 2 | anatase TiO ₂ , mordenite |
| 15 | 84 | 81 | 15 | 43 | 3 | anatase TiO ₂ , mordenite |
| 16 | 83 | 81 | 14 | 40 | 0 | anatase TiO ₂ , mordenite |
| 17 | 81 | 79 | 12 | 40 | 0 | anatase TiO ₂ , mordenite |
| 18 | 79 | 79 | 13 | 47 | 2 | anatase TiO ₂ , mordenite |
| 19 | 75 | 79 | 12 | 40 | 3 | anatase |
| initial | 85 | 86 | 21 | 45 | 4 | |
| Comparative ex.1 | 43 | 65 | 0 | 20 | 40 | partly aluminum sulfate |
| Comparative ex.2 | 47 | 67 | -1 | 15 | 92 | crystal (rutile) |
| Comparative ex.3 | 42 | 60 | 0 | 18 | 89 | crystal (rutile) |
| Comparative ex.4 | 48 | 66 | 1 | 23 | 47 | crystal |
| Comparative ex.5 | 53 | 67 | 3 | 29 | 45 | crystal |

As shown in Table 2, the rate of purification of each catalyst of the present invention was close to that of the initial catalyst prior to endurance tests. These results show that the deterioration of the catalysts of the present invention was very slight In contrast, in the case of the comparative examples using neither mordenite nor needle-like titania, the rate of purification greatly decreased, and the rate of deterioration of the specific surface area (D) indicating the degree of the deterioration of the catalyst layer was remarkably increased. Upon examining the comparative examples with XRD, it was observed that the titania layer was changed to crystal (rutile) due to sintering. In contrast, in the case of the present embodiments, the rate of deterioration of the specific surface area (D) were small, and upon examining with XRD, titania was in the state of anatase in each embodiment These results show that the catalysts of the present embodiments were substantially identical to the initial catalyst prior to endurance tests in their state and performance.

As described above, with the catalyst for purifying exhaust gases from diesel engines in accordance with the present invention, of which a heat-resistant inorganic oxidelayer contains as a main ingredient silica-doped titania and needle-like titanium oxide or zeolite, high purification performance against HC, CO, NOx and particulates, and good durability can be achieved even in high temperature atmospheres such as exhaust gases from diesel engines, which show thathigh catalytic property of silica-doped titania can be maintained, because the particles of the heat-resistant inorganic oxide layer supporting catalysts are not enlarged.

While the invention has been described in connection with the most practical and preferred embodiments, it is to be understood that the invention is not limited to the disclosed embodiments, but, on the contrary, is intended to cover various modifications and equivalent arrangements included within the scope of the appended claims.

## Claims

1. A catalyst for purifying exhaust gases, comprising:
a catalyst substrate; and
a heat-resistant inorganic oxide layer containing catalytic components, which is provided on said catalyst substrate, said heat-resistant inorganic oxide layer containing silica-doped anatase titania having a structure wherein 3 to 35 % by weight of silica based on the total weight of silica-doped anatase titania is finely dispersed between and retained by anatase titania particles, which is an oxide obtained in the state where a silicon-containing compound and titanium-containing component are mixed in the molecular state.

2. A catalyst as claimed in claim 1, wherein said silica-doped anatase titania has a BET specific surface area of 50 to 200 m²/g which decreases by 10 % or less due to heat treatment in air at 800 °C for 5 hours.

3. A catalyst as claimed in claim 1, wherein the peak strength cps of said silica-doped anatase titania upon X-ray diffraction analysis with 2 θ = 25° increases by 1.5 times or less due to heat treatment in air at 800 °C for 5 hours.

4. A catalyst as claimed in claim 1, wherein said catalytic components include at least one of platinum, palladium and rhodium.

5. A catalyst according to claim 1, wherein said heat-resistant inorganic oxide layer is composed of a layer of said silica-doped anatase titania and at least one catalytic component selected from the group consisting of platinum, palladium and rhodium.

6. A catalyst as claimed in claim 5, wherein said silica-doped anatase titania has a BET specific surface area of 50 to 200 m²/g which decreases by 10 % or less due to heat treatment in air at 800 °C for 5 hours.

7. A catalyst as claimed in claim 5, wherein the peak strength cps of said silica-doped anatase titania upon X-ray diffraction with 2 θ = 25° increases by 1.5 times or less due to heat treatment in air at 800 °C for 5 hours.

8. A catalyst according to claim 1, wherein said heat-resistant inorganic oxide layer is composed of a heat-resistant ceramic layer containing powder of said silica-doped anatase titania and needle-like titanium oxide such that 100 % by weight of said heat-resistant ceramic layer contains 5 to 80 % by weight of needle-like titanium oxide, said needle-like titanium oxide being dispersed in said heat-resistant ceramic layer randomly.

9. A catalyst as claimed in claim 8, wherein said silica-doped anatase titania has a BET specific surface area of 50 to 200 m²/g which decreases by 10 % or less due to heat treatment in air at 800 °C for 5 hours.

10. A catalyst as claimed in claim 8, wherein the peak strength cps of said silica-doped anatase titania upon X-ray diffraction analysis with 2 θ = 25° increases by 1.5 times or less due to heat treatment in air at 800 °C for 5 hours.

11. A catalyst as claimed in claim 8, wherein said silica-doped anatase titania powder has an average particle diameter of 0.01 to 50 µm and a BET specific surface area of 50 to 200 m²/g, said needle-like titanium oxide has an average fiber diameter of 0.01 to 1 µm and a fiber length of 0.5 to 30 µm.

12. A catalyst according to claim 1, wherein said heat-resistant inorganic oxide layer is composed of a heat-resistant ceramic layer containing powder of said silica-doped anatase titania and zeolite such that 100 % by weight of said heat-resistant ceramic layer containing 5 to 80 % by weight of zeolite, said zeolite being dispersed in said heat-resistant ceramic layer randomly.

13. A catalyst as claimed in claim 12, wherein said silica-doped anatase titania has a BET specific surface area of 50 to 200 m²/g which decreases by 10 % or less due to heat treatment in air at 800 °C for 5 hours.

14. A catalyst as claimed in claim 12, wherein the peak strength cps of said silica-doped anatase titania upon X-ray diffraction with 2 θ = 25° increases by 1.5 times or less due to heat treatment in air at 800 °C for 5 hours.

15. A catalyst as claimed in claim 12, wherein said silica-doped anatase titania powder has an average particle diameter of 0.01 to 50 µm and a BET specific surface area of 50 to 200 m²/g, said zeolite is ferrielite-type, pentasile-type (ZSM-5), mordenite-type, Y-type zeolite, and has an average particle diameter of 0.1 to 50 µm.

16. A catalyst as claimed in claim 12, wherein said catalytic components include at least one of palladium, rhodium and iridium.

17. A catalyst as claimed in claim 12, wherein said catalytic components include at least one of Cs, W, Mo, V, Zr, Y, In, Ce, Pr, Cu, Co, Au and Ag as an additive.

18. Use of a catalyst according to any of the preceding claims for purifying exhaust gases discharged from diesel engines.

## Patentansprüche

1. Katalysator zur Reinigung von Abgasen, der das Folgende umfasst:
ein Katalysatorsubstrat; und
eine wärmebeständige Schicht aus anorganischem Oxid, die katalytische Komponenten enthält und auf dem Katalysatorsubstrat vorgesehen ist, wobei die wärmebeständige Schicht aus anorganischem Oxid mit Siliziumoxid dotiertes Anatas-Titanoxid enthält, das eine Struktur aufweist, in der 3 bis 35 Masse-% Siliziumoxid, basierend auf der gesamten Masse an mit Siliziumoxid dotiertem Anatas-Titanoxid, dazwischen fein dispergiert sind und durch die Anatas-Titanoxid-Teilchen gehalten werden, und wobei dies ein Oxid ist, das in dem Zustand, dass eine siliziumhaltige Verbindung und eine titanhaltige Verbindung in molekularem Zustand vermischt werden, erhalten wird.

2. Katalysator wie in Anspruch 1 beansprucht, wobei das mit Siliziumoxid dotierte Anatas-Titanoxid eine spezifische BET-Oberfläche von 50 bis 200 m²/g aufweist, welches sich während einer Wärmebehandlung in Luft bei 800 °C über 5 Stunden um 10 % oder weniger verringert.

3. Katalysator wie in Anspruch 1 beansprucht, wobei die Peakstärke cps eines mit Siliziumoxid dotierten Anatas-Titanoxids bei der X-ray-Diffraktionsanalyse mit 2 θ = 25° während der Wärmebehandlung in Luft bei 800 °C für 5 Stunden um das 1,5-fache oder weniger ansteigt.

4. Katalysator wie in Anspruch 1 beansprucht, wobei die katalytischen Komponenten wenigstens ein Element aus Platin, Palladium und Rhodium mit einschließen.

5. Katalysator gemäß Anspruch 1, wobei die wärmebeständige Schicht aus anorganischem Oxid aus einer Schicht aus mit Siliziumoxid dotiertem Anatas-Titanoxid und wenigstens einer katalytischen Komponente, die aus der aus Platin, Palladium und Rhodium bestehenden Gruppe ausgewählt ist, besteht.

6. Katalysator wie in Anspruch 5 beansprucht, wobei das mit Siliziumoxid dotierte Anatas-Titanoxid eine spezifische BET-Oberfläche von 50 bis 200 m²/g aufweist, welche sich während einer Wärmebehandlung in Luft bei 800 °C für 5 Stunden um 10 % oder weniger verringert.

7. Katalysator wie in Anspruch 5 beansprucht, wobei die Peakstärke cps des mit Siliziumoxid dotierten Anatas-Titanoxids während der X-ray-Diffraktion mit 2 θ = 25° aufgrund der Wärmebehandlung in Luft bei 800 °C für 5 Stunden um das 1,5-fache oder weniger ansteigt.

8. Katalysator gemäß Anspruch 1, wobei die wärmebeständige Schicht aus anorganischem Oxid aus einer wärmebeständigen Keramikschicht aufgebaut ist, die Pulver des mit Siliziumoxid dotierten Anatas-Titanoxids und nadelartiges Titanoxid derart enthält, dass 100 Masse-% der wärmebeständigen Keramikschicht 5 bis 80 Masse-% nadelartiges Titanoxid enthalten, wobei das nadelartige Titanoxid in der wärmebeständigen Keramikschicht statistisch dispergiert ist.

9. Katalysator wie in Anspruch 8 beansprucht, wobei das mit Siliziumoxid dotierte Anatas-Titanoxid eine spezifische BET-Oberfläche von 50 bis 200 m²/g aufweist, welche sich während einer Wärmebehandlung in Luft bei 800 °C für 5 Stunden um 10 % oder weniger verringert.

10. Katalysator wie in Anspruch 8 beansprucht, wobei die Peakstärke cps des mit Siliziumoxid dotierten Anatas-Titanoxids während der X-ray-Diffraktion mit 2 θ = 25° aufgrund der Wärmebehandlung in Luft bei 800 °C für 5 Stunden um das 1,5-fache oder weniger ansteigt.

11. Katalysator wie in Anspruch 8 beansprucht, wobei das Pulver des mit Siliziumoxid dotierten Anatas-Titanoxids einen durchschnittlichen Teilchendurchmesser von 0,01 bis 50 µm und eine spezifische BET-Oberfläche von 50 bis 200 m²/g aufweist, wobei das nadelartige Titanoxid einen durchschnittlichen Faserdurchmesser von 0,01 bis 1 µm und eine Faserlänge von 0,5 bis 30 µm aufweist.

12. Katalysator gemäß Anspruch 1, wobei die wärmebeständige Schicht aus anorganischem Oxid aus einer wärmebeständigen Keramikschicht aufgebaut ist, die Pulver des mit Siliziumoxid dotierten Anatas-Titanoxids und Zeolith derart enthält, dass 100 Masse-% der wärmebeständigen keramischen Schicht 5 bis 80 Masse-% Zeolith enthalten, wobei der Zeolith in der wärmebeständigen Keramikschicht statistisch dispergiert ist.

13. Katalysator wie in Anspruch 12 beansprucht, wobei das mit Siliziumoxid dotierte Anatas-Titanoxid eine spezifische BET-Oberfläche von 50 bis 200 m²/g aufweist, welche sich aufgrund der Wärmebehandlung in Luft bei 800 °C für 5 Stunden um 10 % oder weniger verringert.

14. Katalysator wie in Anspruch 12 beansprucht, wobei die Peakstärke cps des mit Siliziumoxid dotierten Anatas-Titanoxids bei der X-ray-Diffraktion mit 2 θ = 25° aufgrund der Wärmebehandlung in Luft bei 800 °C über 5 Stunden um das 1,5-facher oder weniger ansteigt.

15. Katalysator wie in Anspruch 12 beansprucht, wobei das Pulver des mit Siliziumoxid dotierten Anatas-Titanoxids einen durchschnittlichen Teilchendurchmesser von 0,1 bis 50 µm und eine spezifische BET-Oberfläche von 50 bis 200 m²/g aufweist, wobei der Zeolith vom Ferrielite-Typ, Pentasil-Typ (ZSM-5), Mordenit-Typ und Y-Zeolithtyp ist und einen durchschnittlichen Teilchendurchmesser von 0,1 bis 50 µm aufweist.

16. Katalysator wie in Anspruch 12 beansprucht, wobei die katalytischen Komponenten wenigstens ein Element aus Palladium, Rhodium und Iridium einschließen.

17. Katalysator wie in Anspruch 12 beansprucht, wobei die katalytischen Komponenten wenigstens ein Element aus Cs, W, Mo, V, Zr, Y, In, Ce, Pr, Cu, Co, Au und Ag als einen Zusatzstoff einschließen.

18. Verwendung eines Katalysator gemäß irgendeinem der vorhergehenden Ansprüche zur Reinigung von Abgasen, die aus Dieselmotoren ausgestoßen werden.

## Revendications

1. Catalyseur pour purifier les gaz d'échappement comprenant :
un substrat à catalyseur; et
une couche d'oxyde inorganique résistante à la chaleur contenant des composants catalytiques, qui est prévue sur ledit substrat à catalyseur, ladite couche d'oxyde inorganique résistante à la chaleur contenant de l'oxyde de titane anatase dopé en silice ayant une structure dans laquelle 3 à 35% en poids de silice par rapport au poids total de l'oxyde de titane anatase dopé en silice, sont finement dispersés entre les particules d'oxyde de titane anatase et retenus par celles-ci, lequel oxyde est un oxyde obtenu dans l'état où un composé contenant du silicium et un composant contenant du titane sont mélangés à l'état moléculaire.

2. Catalyseur selon la revendication 1, dans lequel ledit oxyde de titane anatase dopé en silice possède une surface spécifique BET de 50 à 200 m²/g qui diminue de 10% ou moins en raison d'un traitement thermique à l'air à 800°C pendant 5 heures.

3. Catalyseur selon la revendication 1, dans lequel l'intensité du pic en c/s dudit oxyde de titane anatase dopé en silice lors d'une analyse par diffraction des rayons X avec 2θ = 25° diminue d'un facteur 1,5 ou moins en raison du traitement thermique à l'air à 800°C pendant 5 heures.

4. Catalyseur selon la revendication 1, dans lequel lesdits composants catalytiques comportent au moins un élément choisi parmi le platine, le palladium et le rhodium.

5. Catalyseur selon la revendication 1, dans lequel ladite couche d'oxyde inorganique résistante à la chaleur se compose d'une couche dudit oxyde de titane anatase dopé en silice et d'au moins un composant catalytique choisi dans le groupe formé par le platine, le palladium et le rhodium.

6. Catalyseur selon la revendication 5, dans lequel ledit oxyde de titane anatase dopé en silice possède une surface spécifique BET de 50 à 200 m²/g qui diminue de 10% ou moins en raison d'un traitement thermique à l'air à 800°C pendant 5 heures.

7. Catalyseur selon la revendication 5, dans lequel l'intensité du pic en c/s dudit oxyde de titane anatase dopé en silice lors de la diffraction de rayons X avec 2θ = 25° augmente d'un facteur 1,5 ou moins en raison d'un traitement thermique à l'air à 800°C pendant 5 heures.

8. Catalyseur selon la revendication 1, dans lequel la couche d'oxyde inorganique résistante à la chaleur se compose d'une couche céramique résistante à la chaleur contenant de la poudre desdits oxyde de titane anatase dopé en silice et oxyde de titane en forme d'aiguilles, de sorte que 100% en poids de ladite couche céramique résistante à la chaleur contient 5 à 80% en poids d'oxyde de titane en forme d'aiguilles, ledit oxyde de titane en forme d'aiguilles étant dispersé de façon aléatoire dans ladite couche céramique résistante à la chaleur.

9. Catalyseur selon la revendication 8, dans lequel ledit oxyde de titane anatase dopé en silice possède une surface spécifique BET de 50 à 200 m²/g qui diminue de 10% ou moins en raison d'un traitement thermique à l'air à 800°C pendant 5 heures.

10. Catalyseur selon la revendication 8, dans lequel l'intensité du pic en c/s dudit oxyde de titane anatase dopé en silice lors d'une analyse par diffraction des rayons X avec 2θ = 25° augmente d'un facteur 1,5 ou moins en raison d'un traitement thermique à l'air à 800°C pendant 5 heures.

11. Catalyseur selon la revendication 8, dans lequel ladite poudre d'oxyde de titane anatase dopé en silice possède un diamètre moyen de particule de 0,01 à 50 *µ*m et une surface spécifique BET de 50 à 200 m²/g, ledit oxyde de titane en forme d'aiguilles possède un diamètre moyen de fibres de 0,01 à 1 *µ*m et une longueur de fibres de 0,5 à 30 *µ*m.

12. Catalyseur selon la revendication 1, dans lequel ladite couche d'oxyde inorganique résistante à la chaleur se compose d'une couche céramique résistante à la chaleur contenant de la poudre desdits oxyde de titane anatase dopé en silice et zéolite de sorte que 100% en poids de ladite couche céramique résistante à la chaleur contient 5 à 80% en poids de zéolite, ladite zéolite étant dispersée de façon aléatoire dans ladite couche céramique résistante à la chaleur.

13. Catalyseur selon la revendication 12, dans lequel ledit oxyde de titane anatase dopé en silice possède une surface spécifique BET de 50 à 200 m²/g qui diminue de 10% ou moins en raison d'un traitement thermique à l'air à 800°C pendant 5 heures.

14. Catalyseur selon la revendication 12, dans lequel l'intensité de pic en c/s dudit oxyde de titane anatase dopé en silice lors d'une diffraction des rayons X avec 2θ = 25° augmente d'un facteur 1,5 ou moins en raison d'un traitement thermique à l'air à 800°C pendant 5 heures.

15. Catalyseur selon la revendication 12, dans lequel ladite poudre d'oxyde de titane anatase dopé en silice possède un diamètre moyen de particule de 0,01 à 50 *µ*m et une surface spécifique BET de 50 à 200 m²/g, ladite zéolite est une zéolite du type ferriélite, du type pentasil (ZSM-5) , du type mordénite, du type Y, et possède un diamètre moyen de particule de 0,1 à 50 *µ*m.

16. Catalyseur selon la revendication 12, dans lequel lesdits composants catalytiques comportent au moins un élément choisi parmi le palladium, le rhodium et l'iridium.

17. Catalyseur selon la revendication 12, dans lequel lesdits composants catalytiques comportent au moins un élément choisi parmi Cs, W, Mo, V, Zr, Y, In, Ce, Pr, Cu, Co, Au et Ag en tant qu'additifs.

18. Utilisation d'un catalyseur selon l'une quelconque des revendications précédentes pour purifier des gaz d'échappement émis de moteurs diesel.
